# FASCICULE DE BREVET EUROPEEN

(11) **EP 2 751 051 B1**
(45) Date de publication et mention de la délivrance du brevet: **06.07.2016**
(21) Numéro de dépôt: 12759077.6
(22) Date de dépôt: 05.09.2012
(51) Int. Cl.: C04B 35/66, C21B 7/06

(54) **MASSE À DAMER POUR LE REVÊTEMENT RÉFRACTAIRE D'UN RÉCIPIENT MÉTALLURGIQUE, PROCÉDÉ POUR SA MISE EN UVRE ET RÉCIPIENT MÉTALLURGIQUE, NOTAMMENT HAUT-FOURNEAU, COMPORTANT UN REVÊTEMENT UTILISANT LA DITE MASSE À DAMER**
STOPFMASSE FÜR DIE FEUERFESTE AUSKLEIDUNG EINES METALLURGISCHEN GEFÄSSES, METALLURGISCHES GEFÄSS, BEISPIELSWEISE EIN HOCHOFEN, DAS EINE AUSKLEIDUNG UMFASST, DIE DIE GENANNTE STOPFMASSE VERWENDET
RAMMING MASS FOR THE REFRACTORY LINING OF A METALLURGICAL VESSEL, METALLURGICAL VESSEL, SUCH AS BLAST FURNACE, INCLUDING A LINING USING SAID RAMMING MASS

(30) Priorité: 09.09.2011 LU 91868
(43) Date de publication de la demande: 09.07.2014
(73) Titulaire: Paul Wurth S.A., 1122 Luxembourg (LU)
(72) Inventeur: PIRET, Jacques, B-4000 Liège (BE)
(74) Mandataire: Office Freylinger
(86) Numéro de dépôt international: PCT/EP2012/067344
(87) Numéro de publication internationale: WO 2013/034605

(56) Documents cités:
- EP-A1- 0 500 061
- FR-A1- 2 444 716
- LU-A- 48 404

## Description

### Domaine technique

La présente invention concerne de manière générale le revêtement réfractaire interne d'un récipent métallurgique, tel que notamment la cuve d'un haut fourneau, et plus particulièrement la partie inférieure de cette cuve ou creuset. Elle concerne l'utilisation d'une masse à damer pour la réalisation des joints entre les blocs de carbones constituant le dit revêtement et le fond du creuset, ainsi que les joints entre ces blocs.

### Etat de la technique

Dans le cas particulier des hauts-fourneaux, le revêtement réfractaire interne est classiquement constitué d'un assemblage de plusieurs éléments réfractaires, sous forme de blocs ou briques, de dimensions et formes identiques ou différentes selon l'emplacement de chaque bloc ou brique. La matière constitutive de ces éléments réfractaires dépend aussi de leur localisation dans la cuve. Ainsi le fond du creuset, ou sole, est couramment garni de plusieurs couches superposées d'éléments, par exemple deux ou trois couches de blocs de carbone surmontées de deux couches d'éléments en céramique, la couche supérieure constituant le fond du creuset, au contact de la fonte en fusion. Le revêtement réfractaire des parois latérales du creuset est lui aussi formé couramment d'une superposition de plusieurs couches réfractaires annulaires. Dans la partie inférieure, chaque couche peut comporter une partie annulaire extérieure, située le plus près de la paroi métallique de la cuve, et une partie annulaire intérieure, qui constitue la paroi latérale du creuset au contact de la fonte en fusion, ou la plus proche de celle-ci. Chaque partie annulaire est formée d'une pluralité de blocs juxtaposés circonférentiellement, et la matière des différents blocs est adaptée à sa situation dans les différents couches et anneaux. De plus, des éléments de forme et matière spécifiques sont utilisés au niveau des trous de coulée et aussi, plus haut, au niveau des tuyères.

Les masses à damer sont utilisées pour la confection du revêtement réfractaire interne de la cuve pour combler les espaces entre les éléments réfractaires, blocs ou briques, typiquement en carbone ou céramique, et les parois ou autres éléments métalliques constituant la cuve du haut-fourneau, et aussi pour combler les espaces entre des éléments réfractaires adjacents, ou entre différentes couches ou rangées de tels éléments, et en particulier entre certains éléments réfractaires de la sole et certains autres éléments des parois latérales du creuset.

En fonction de leur localisation, on aura ainsi des joints dits « froids » entre les blocs des anneaux extérieurs et les panneaux de refroidissement, et des joints chauds entre les blocs d'un anneau intérieur et ceux d'un anneau extérieur.

La distance entre un anneau intérieur et un anneau extérieur peut être sensiblement constante, par exemple de l'ordre de 50 mm, avec une précision de quelques mm, cela résultant de la bonne tolérance dimensionnelle des blocs.

Par contre, du fait des irrégularités géométriques de la cuve, en particulier de sa non parfaite circularité résultant des tolérances beaucoup plus importantes des panneaux de refroidissement de la paroi de la cuve, la distance entre les blocs d'un anneau extérieur et les parois refroidies de la cuve peuvent varier sensiblement sur la circonférence, l'épaisseur du joint à réaliser étant typiquement de 80 mm, + ou - 20mm.

Aussi, il doit être tenu compte du fort différentiel de température existant, en service, entre la paroi interne du creuset et la face externe du revêtement, située à proximité de la paroi métallique de la cuve, et de la variation de ce différentiel de température lors des différentes phases de fonctionnement, en particulier lors du démarrage. En effet, lors du maçonnage initial des blocs, tous sont à basse température, qu'ils soient situés vers l'intérieur du creuset ou vers la paroi de la cuve, alors que, lors du fonctionnement du haut-fourneau, les blocs les plus externes restent relativement froids, alors que ceux au contact de la fonte en fusion sont portés à de très hautes températures. Il est donc nécessaire de permettre des variations des espaces entre blocs, notamment dans la direction radiale, entre les blocs de deux anneaux concentriques, pour absorber des dilatations différentielles importantes lorsque, lors de la mise en service notamment, la couche intérieure du revêtement s'échauffe beaucoup plus vite que la couche extérieure. Le joint entre deux anneaux est donc fort avantageusement compressible. A titre d'exemple, la compressibilité des joints entre ces deux couches peut atteindre 15 à 20 %.

Au niveau des joints entre les anneaux intérieurs de la paroi et les couches supérieures de la sole, l'espace peut aussi être de dimensions assez irrégulières, notamment du fait de la forme des blocs ou briques de la sole disposés selon un plan, mais pouvant être assemblés dans ce plan selon des lignes parallèles, alors que les blocs de l'anneau sont disposés selon un cercle. Outres les variations dimensionnelles importantes de ces joints, qui peuvent aussi être appelés joints chauds, ils sont de plus réalisés entre des blocs qui peuvent être de matières différentes, par exemple carbone pour les blocs des anneaux et céramique pour la sole, ce qui génère des comportements différents lors des éventuelles variations de température, notamment en phase de démarrage du haut-fourneau.

L'utilisation de masse à damer est donc rendue nécessaire pour compenser toutes les irrégularités géométriques pouvant laisser des espaces entre blocs adjacents, ayant donc un rôle de remplissage des espaces irréguliers et/ou variables entre les blocs. La masse à damer a aussi pour rôle d'assurer un transfert thermique satisfaisant de la face interne chaude du revêtement vers sa face externe refroidie, et au moins de ne pas perturber le transfert thermique qui a lieu à travers les éléments réfractaires. La masse à damer a aussi, et de manière importante, le rôle de fournir un corps compressible, à la manière d'un joint plastiquement compressible, capable d'absorber et réduire les contraintes thermo-mécaniques qui peuvent se développer entre éléments réfractaires, dues notamment aux variations de températures, en particulier entre les briques de la sole et la couche intérieure de blocs du revêtement latéral, et aussi entre ladite couche intérieure et la couche extérieure de ce revêtement.

Les masses à damer connues sont couramment constituées d'un mélange d'une phase granulaire constituée d'anthracite calcinée ou d'électrographite, ou d'un mélange de ceux-ci, avec un éventuel ajout de SiC, et d'un liant généralement de type goudron ou résine, visant à fournir la capacité de compression indiquée ci-dessus.

Diverses compositions de masse à damer sont déjà connues par exemple par JP 2002121080, CN 1544389, CN1690012, CN101823891.

Un problème général des masses à damer est qu'elles sont généralement mise en oeuvre par compactage à la main, éventuellement assisté par des machines de compactage, mais toujours moins homogènes et moins compactes que les blocs ou briques réfractaires fabriqués par des procédés sophistiqués de pressage ou extrusion. La phase granulaire étant par ailleurs essentiellement à base de carbone ou graphite standard, la résistance à l'érosion et/ou à la corrosion des joints formés par ces masses à damer, sous l'effet du métal en fusion et des agents agressifs : alcalins, vapeur d'eau, etc. , est beaucoup plus faible que celle des éléments réfractaires préfabriqués.

Par ailleurs, le liant de type goudron couramment utilisé peut rester relativement souple jusqu'à une température de l'ordre de 500°C, mais à des températures plus élevées, par exemple à partir d'environ 800°C, il polymérise et forme une liaison très solide entre les grains de la masse à damer, détruisant ainsi la relative souplesse de celle-ci. Ainsi, des masses à damer selon l'art antérieur, avec un liant de ce type, peuvent être utilisées au niveau des joints « froids », puisque alors la température relativement faible permet de conserver la compressibilité requise du joint, particulièrement entre les anneaux extérieurs, ou couches extérieures de réfractaires, et les parois métalliques refroidies de la cuve. Par contre, au niveau des joints chauds précités, le durcissement du joint conduit, au-delà d'une température de l'ordre de 500°C, à une perte de compressibilité. Ce durcissement du joint peut également conduire, particulièrement au niveau des joints entre sole et paroi latérale, à un accroissement du risque d'infiltration par fissurations des joints.

### Objet de l'invention

La présente invention a donc pour but d'améliorer la pérennité des joints formés par la masse à damer, en particulier pour les joints dits « chauds », tels que ceux réalisés entre le revêtement de sole et les blocs du revêtement latéral, ou encore entre les blocs d'un anneau intérieur et ceux se trouvant en regard sur l'anneau extérieur. Elle vise aussi à améliorer le transfert de chaleur, par exemple entre de tels blocs.

Conformément à l'invention, cet objectif est atteint par l'utilisation d'une masse à damer pour le maçonnage d'au moins certains des éléments réfractaires d'un revêtement réfractaire d'un récipient métallurgique tel qu'un haut-fourneau, la dite masse à damer étant constituée d'un mélange d'une phase granulaire et d'une phase liant, dans laquelle la phase granulaire et le liant comporte au moins un composant ayant une structure microporeuse ou apte à former une structure microporeuse par cuisson durant la campagne du haut-fourneau.

### Description générale de l'invention

La masse à damer à utiliser selon l'invention présente ainsi l'avantage de créer dans le récipient métallurgique des joints entre blocs ou briques qui présentent une meilleure résistance aux agressions du métal en fusion et aux autres agents agressifs susceptibles d'agir physiquement ou chimiquement sur ces joints. Cette amélioration résulte de la structure microporeuse des joints, qui évite ou au moins limite fortement les infiltrations de métal ou autres agents agressifs par les joints, évitant ainsi une attaque correspondante des blocs à partir de zones de joints endommagées. A ce titre, il faut noter l'effet bénéfique d'une part de l'utilisation d'une phase granulaire microporeuse, et d'autre part d'un liant apte à constituer une telle structure microporeuse, tout en gardant une bonne compressibilité au moins dans les premières périodes d'échauffement, comme on le verra par la suite.

On notera que, dans le contexte de l'invention (et en particulier contrairement à la définition qui en est donnée par l'IUPAC), on entend par structure microporeuse une structure dont les pores ont une dimension moyenne de moins de 2 µm. Les matériaux microporeux évoqués pour la présente invention s'entendront donc comme ayant une dimension moyenne de pores de 2µm ou moins, et préférentiellement de 1 µm ou moins.

Selon l'invention la phase granulaire comporte essentiellement des grains de carbone, ou à base de carbone, ayant une structure microporeuse. En soi, une telle structure apporte déjà, par rapport aux matériaux granulaires de l'art antérieur, une amélioration sensible par la diminution des dimensions des pores, permettant ainsi, comme indiqué précédemment, d'offrir une meilleure résistance aux agressions du métal en fusion et aux autres agents agressifs susceptibles d'agir physiquement ou chimiquement sur ces joints. De plus, elle permet aussi, de manière similaire aux blocs à structure microporeuse, d'assurer une transmission plus efficace des flux thermiques, limite donc l'échauffement de la couche de surface, et participe ainsi au maintien d'une couche de métal plus froid au contact de ladite surface du revêtement, cette couche de métal plus froid ayant aussi un effet protecteur de la paroi réfractaire.

La masse à damer peut être formée de cette phase granulaire microporeuse et d'un liant à base de goudron ou de résine polymérisante.

La phase phase liant comporte au moins un composant de type goudron, qui est de plus apte à développer une structure microporeuse lors de la cuisson à haute température qui se produit lors de la montée en température après mise en oeuvre de la masse à damer, lorsque le haut-fourneau est remis en service. Ainsi, au début d'une campagne d'utilisation du haut-fourneau, avant le durcissement des joints sous l'effet des températures élevées pré-mentionnées, la compressibilité du liant agit de manière connue pour autoriser la relaxation des contraintes thermo-mécaniques générées par l'échauffement différentiel des matériaux dans l'ensemble du revêtement réfractaire. Et ensuite, lors de la cuisson des joints sous l'effet des hautes températures, typiquement de plus de 800°C, il se produit le durcissement connu par polymérisation mais aussi la formation, spécifique à l'invention, d'une structure microporeuse.

Selon une autre disposition alternative, la phase liant comporte au moins un composant de type résine polymérisante, également apte à développer une structure microporeuse lors de la cuisson à haute température qui se produit lors de la montée en température après mise en oeuvre de la masse à damer, lorsque le haut-fourneau est remis en service. Ainsi, au début d'une campagne d'utilisation du haut-fourneau, avant le durcissement des joints sous l'effet de températures élevées, la compressibilité du liant agit de manière connue pour autoriser la relaxation des contraintes thermo-mécaniques générées par l'échauffement différentiel des matériaux dans l'ensemble du revêtement réfractaire. Et ensuite, après de la cuisson des joints sous l'effet desdites hautes températures, il se produit le durcissement connu par polymérisation et aussi, à un certain moment, en particulier au-delà de 800°C, la formation spécifique à l'invention d'une structure microporeuse.

Cette structure microporeuse résulte de l'addition dans le liant d'un additif apte à le rendre microporeux lors de la cuisson, une poudre de silicium métallique, dont l'effet est de générer, avec le carbone du goudron ou de la résine ou des fibres de carbone, des whiskers de SiC lors de la cuisson. Pour mémoire, il est rappelé que les « whiskers » sont des objets (barbes) allongés de faible diamètre et pratiquement sans défauts cristallins, ce qui leur assure une très grande résistance mécanique. Ces whiskers, en s'étendant en travers des porosités de la matière goudronneuse ou de résine polymérisée durcies, forment la microporosité qui constitue des obstacles très résistants empêchant la pénétration du métal liquide ou autres agents agressifs.

Selon une autre disposition particulière, la phase granulaire de matériau microporeux peut être obtenue par broyage de blocs réfractaires microporeux, de déchets de découpage de blocs réfractaires microporeux, ou de blocs de carbone microporeux usagés récupérés d'un revêtement réfractaire antérieur.

Selon encore une autre disposition, la phase matricielle de liant peut comporter des grains fins de graphite qui, en améliorant la lubrification propre de la masse à damer, lui confère de meilleures capacités de compactage.

Egalement, cette phase matricielle peut comporter des agents protecteurs contre l'érosion par la fonte liquide, tels que par exemple TiC ou TiO2, qui ont une capacité à rendre plus visqueuse la fonte entrant en contact avec les joints formés, et ainsi empêcher encore mieux la pénétration de fonte dans la matière du joint.

L'invention a aussi pour objet un procédé de réalisation des joints chauds entre les éléments réfractaires d'un revêtement réfractaire d'un récipient métallurgique tel qu'un haut-fourneau, selon lequel on utilise une masse damer constituée d'un mélange d'une phase granulaire et d'une phase liant, dans lequel le liant comporte au moins un composant à base de goudron ou de résine polymérisante, et un additif, tel que de de la poudre de silicium métallique, apte à rendre le liant microporeux par la cuisson résultant de la montée en température du récipient métallurgique, après mise en oeuvre de la masse à damer.

Ce procédé sera particulièrement utilisé pour la réalisation des joints entre deux ensembles annulaires concentriques formant une paroi latérale du récipient, et déterminant entre eux un espace annulaire comblé par lesdits joints, et aussi pour la réalisation des joints entre une partie inférieure d'un ensemble annulaire intérieur constitutif d'une paroi latérale du récipient et la périphérie d'une ou plusieurs couches réfractaires formant le fond du récipient

L'invention a encore pour objet un récipient métallurgique, tel qu'un haut-fourneau, comportant un revêtement réfractaire formé d'un assemblage de plusieurs ensembles de blocs ou briques réfractaires, déterminant entre au moins certains de ces blocs ou briques ou ensembles de blocs ou briques, des espaces comblés par un joint, dans lequel les joints sont formés à partir d'une masse à damer telle que définie précédemment. Un tel joint peut être formé entre deux ensembles annulaires concentriques formant une paroi latérale du creuset, et déterminant entre eux un espace annulaire comblé par ledit joint. Le cas échéant, la paroi latérale pourrait aussi comporter plus de deux ensembles annulaires concentriques, et le joint étant formé à chaque interface entre lesdits ensembles annulaires. Un tel joint peut aussi être formé entre une partie inférieure d'un ensemble annulaire intérieur et la périphérie d'une ou plusieurs couches réfractaires formant le fond du récipient.

### Brève description des dessins

D'autres particularités et caractéristiques de l'invention ressortiront de la description complémentaire donnée ci-dessous, à titre d'illustration, d'une utilisation de la masse à damer selon l'invention pour la réalisation du revêtement réfractaire de la cuve d'un haut-fourneau.

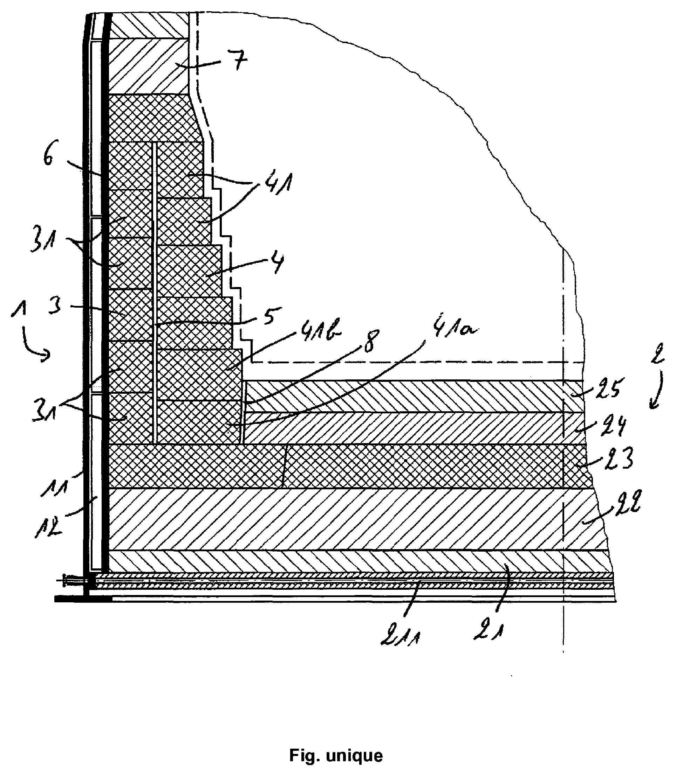

On se reportera au dessin annexé, dont la figure unique montre, en coupe selon un plan radial, la zone du revêtement au voisinage de la jonction entre le revêtement latéral et la sole d'un haut-fourneau.

### Description d'une exécution préférée

La cuve 1 du haut-fourneau représenté seulement partiellement sur la figure comporte, de manière connue, une paroi métallique 11 pourvue de panneaux de refroidissement 12. Le fond 2 comporte plusieurs couches superposées de matériau réfractaire, par exemple, en partant du bas, une première couche 21 de blocs de graphite située au-dessus des tubes de refroidissement 211 parcourus par un liquide de refroidissement, une seconde couche 22 également formée de blocs de carbone standard, une troisième couche 23 pouvant être formée de blocs de carbone super microporeux à très haute conductivité thermique, et deux couches 24, 25 de briques de céramiques. Sous la première couche de blocs 21, les tubes de refroidissement peuvent être noyés dans une masse à damer de carbone.

A partir du niveau de la quatrième couche 24, la paroi réfractaire latérale est constituée de deux ensembles annulaires concentriques 3, 4, chacun étant formé d'un empilement d'anneaux superposés 31, 41, chaque anneau étant constitué de blocs de carbone microporeux à très haute conductivité thermique disposés circonférentiellement. Un espace annulaire, d'une épaisseur radiale de l'ordre de 60 mm, est ménagé entre l'ensemble annulaire extérieur qui se trouve le plus proche des parois refroidies de la cuve et l'ensemble annulaire intérieur, et comblé par un joint 5 réalisé en masse à damer selon l'invention. Les espaces entre d'une part la périphérie des premières couches de sole et l'ensemble annulaire extérieur et, d'autre part, la paroi refroidie des panneaux de refroidissement, sont comblés par une masse à damer 6 qui peut être de type courant, n'étant pas soumise à de très hautes températures.

Les ensembles annulaires concentriques 3 et 4 s'étendent vers le haut jusqu'au niveau supérieur du creuset, le revêtement réfractaire se poursuivant au-delà, vers le haut, par des ensembles annulaires 7 de blocs de carbone standard.

Entre les premières couches 41 a, 41 b d'anneaux intérieurs et les couches de fond céramiques 24, 25 de la sole, un joint périphérique 8 est réalisé avec de la masse à damer selon l'invention, pour compenser les écarts entre la géométrie de la périphérie de la sole et la forme circulaire de la surface interne des premiers anneaux intérieurs. Cette zone est particulièrement délicate car juste dans l'angle entre la sole horizontale et les parois verticale du creuset et donc particulièrement chaude, et de plus cette zone annulaire de jonction entre la sole et la paroi latérale s'étend verticalement et est donc particulièrement propice à des infiltrations de fonte en fusion. Le joint 8 de masse à damer formé à ce niveau peut de plus avoir des variations d'épaisseur substantielles, dans la direction radiale, ce qui nuit aussi à l'homogénéité de caractéristiques thermiques. La masse à damer selon l'invention est particulièrement justifiée à ce niveau pour ses hautes caractéristiques en termes de résistance thermomécanique, de barrière contre la pénétration de fonte, et de compressibilité lors de la phase de montée en température du four, pour assurer un minimum de contraintes mécaniques sur les blocs voisins et donc être garant ultérieurement de la meilleure étanchéité possible.

Au niveau des joints 5 entre les deux ensembles annulaires concentriques, ce sont les caractéristiques de conductibilité thermiques et de compressibilité de la masse à damer selon l'invention qui sont particulièrement concernées. La compressibilité permet, comme déjà indiqué, de limiter les contraintes thermo-mécaniques entre les deux ensembles 3 et 4 lorsque l'ensemble intérieur subit directement l'effet de la chaleur du métal en fusion alors que l'ensemble extérieur reste froid. La conductibilité thermique permet d'assurer un transfert thermique optimal de l'intérieur vers l'extérieur du revêtement réfractaire, limitant l'échauffement des blocs des anneaux intérieurs.

Ainsi, en conjonction avec l'utilisation de blocs carbones et céramiques à hautes performances, la mise en oeuvre de la masse à damer selon l'invention permet d'assurer, plus longtemps qu'avec une masse à damer selon l'art antérieur, une bonne homogénéité des caractéristiques thermo-mécaniques de l'ensemble du revêtement réfractaire au niveau de chaque profil isotherme dans l'épaisseur du revêtement, avec la meilleure adéquation possible des caractéristiques des joints aux contraintes locales, de manière à limiter le plus possible l'effet pénalisant des hétérogénéités de structure du revêtement réfractaire au niveau desdits joints.

## Revendications

1. Utilisation d'un mélange d'une phase granulaire et d'une phase liant comme masse à damer pour la réalisation des joints chauds lors du maçonnage d'éléments réfractaires d'un revêtement réfractaire d'un récipient métallurgique tel qu'un haut-fourneau, dans laquelle la phase granulaire comporte essentiellement des grains de carbone, ou à base de carbone, ayant une structure microporeuse et le liant comporte au moins un composant à base de goudron ou de résine polymerisante et un additif constitué de poudre de silicium métallique apte à développer dans le mélange une structure microporeuse ayant une dimension moyenne de pores de 2µm ou moins lors d'une cuisson à haute température, par formation de whiskers se développant en travers des porosités de la matière goudronneuse ou polymérisée durcie.

2. Utilisation selon la revendication 1 dans laquelle le liant comporte des grains fins de graphite.

3. Utilisation selon l'une quelconque des revendications précédentes dans laquelle le liant comporte des agents protecteurs contre l'érosion par la fonte liquide, tels que TiC ou TiO2.

4. Utilisation selon la revendication 1, dans laquelle la phase granulaire comporte essentiellement des grains de carbone, ou à base de carbone, ayant une structure microporeuse ayant une dimension moyenne de pores de 2µm ou moins.

5. Utilisation selon la revendication 4, dans laquelle la phase granulaire de matériau microporeux est obtenue par broyage de blocs réfractaires microporeux, de déchets de découpe de blocs réfractaires microporeux, ou de blocs de carbone microporeux usagés.

6. Procédé de réalisation des joints chauds entre les éléments réfractaires (2, 3, 4) d' un revêtement réfractaire d' un récipient métallurgique tel qu'un haut-fourneau, selon lequel on utilise une masse à damer telle que définie dans l'une quelconque des revendications 1 à 5, et le liant est rendu microporeux par la cuisson résultant de la montée en température du récipient métallurgique, après mise en oeuvre de la masse à damer.

7. Procédé selon la revendication 6, utilisé pour la réalisation des joints (5) entre deux ensembles annulaires concentriques (3, 4) formant une paroi latérale du récipient, et déterminant entre eux un espace annulaire comblé par lesdits joints.

8. Procédé selon la revendication 6, utilisé pour la réalisation des joints (8) entre une partie inférieure d' un ensemble annulaire intérieur (4) constitutif d' une paroi latérale du récipient et la périphérie d' une ou plusieurs couches réfractaires (24, 25) formant le fond du récipient.

9. Récipient métallurgique comportant un revêtement réfractaire formé d'un assemblage de plusieurs ensembles (2, 3, 4) de blocs ou briques réfractaires, déterminant entre au moins certains de ces blocs ou briques ou ensembles de blocs ou briques, des espaces comblés par un joint, dans lequel les joints (5, 8) sont formés à partir d'une masse à damer telle que définie dans l'une quelconque des revendications 1 à 5, ou par le procédé selon l'une des revendications 6 à 8.

10. Récipient métallurgique selon la revendication 9, dans lequel le joint (5) est formé entre deux ensembles annulaires concentriques (4, 6) formant une paroi latérale du récipient, et déterminant entre eux un espace annulaire comblé par ledit joint.

11. Récipient métallurgique selon la revendication 9, dans lequel le joint (8) est formé entre une partie inférieure d'un ensemble annulaire intérieur (4) constitutif d'une paroi latérale du récipient et la périphérie d' une ou plusieurs couches réfractaires (24, 25) formant le fond du récipient.

12. Récipient métallurgique selon l'une quelconque des revendications 9 à 11, **caractérisé en ce qu'**il est un haut-fourneau.

## Patentansprüche

1. Verwendung eines Gemischs aus einer Granulatphase und einer Bindemittelphase als Stampfmasse für die Herstellung der "heißen" Verbindungsfugen beim Vermauern feuerfester Elemente einer feuerfesten Auskleidung eines metallurgischen Gefäßes wie z. B. eines Hochofens, wobei die Granulatphase im Wesentlichen Kohlenstoffkörner oder Körner auf Basis von Kohlenstoff aufweist, die eine mikroporöse Struktur besitzen, und das Bindemittel mindestens eine Komponente auf Basis von Teer bzw. polymerisierendem Harz und einen Zusatzstoff aus metallischem Siliziumpulver aufweist, welcher geeignet ist, beim Brennen unter hohen Temperaturen eine mikroporöse Struktur mit einer mittleren Porengröße von 2 µm oder weniger in dem Gemisch zu entwickeln, und zwar durch Bildung von Whiskern, die sich durch die Porositäten des gehärteten Teer- bzw. polymerisierten Materials hindurch erstrecken.

2. Verwendung nach Anspruch 1, wobei das Bindemittel feine Graphitkörner aufweist.

3. Verwendung nach irgendeinem der vorhergehenden Ansprüche, wobei das Bindemittel Agenzien zum Schutz vor Erosion durch flüssiges Roheisen aufweist, wie z. B. TiC oder TiO2.

4. Verwendung nach Anspruch 1, wobei die Granulatphase im Wesentlichen Kohlenstoffkörner oder Körner auf Basis von Kohlenstoff aufweist, die eine mikroporöse Struktur mit einer mittleren Porengröße von 2 µm oder weniger besitzen.

5. Verwendung nach Anspruch 4, wobei die Granulatphase aus mikroporösem Material dadurch erhalten wird, dass mikroporöse feuerfeste Blöcke, Verschnittabfall mikroporöser feuerfester Blöcke bzw. gebrauchte mikroporöse Kohlenstoffblöcke zerkleinert werden.

6. Verfahren zur Herstellung der "heißen" Verbindungsfugen zwischen den feuerfesten Elementen (2, 3, 4) einer feuerfesten Auskleidung eines metallurgischen Gefäßes wie z. B. eines Hochofens, bei eine Stampfmasse wie in irgendeinem der Ansprüche 1 bis 5 definiert verwendet wird und das Bindemittel nach Verarbeitung der Stampfmasse durch aus dem Aufheizen des metallurgischen Gefäßes resultierendes Brennen mikroporös gemacht wird.

7. Verfahren nach Anspruch 6, welches eingesetzt wird für die Herstellung der Verbindungsfugen (5) zwischen zwei konzentrischen ringförmigen Elementanordnungen (3, 4), die eine Seitenwand des Gefäßes bilden und zwischen denen ein ringförmiger Raum definiert ist, der mit den Verbindungsfugen ausgefüllt wird.

8. Verfahren nach Anspruch 6, welches eingesetzt wird für die Herstellung der Verbindungsfugen (8) zwischen einem unteren Teil einer inneren ringförmigen Elementanordnung (4), die eine Seitenwand des Gefäßes bildet, und der Peripherie einer oder mehrerer feuerfester Schichten (24, 25), die den Boden des Gefäßes bilden.

9. Metallurgisches Gefäß mit einer feuerfesten Auskleidung aus einem Verband aus mehreren Anordnungen (2, 3, 4) von feuerfesten Blöcken oder Steinen, wobei zumindest zwischen einigen dieser Blöcke oder Steine bzw. Block- oder Steinanordnungen Räume definiert sind, die mit einer Verbindungsfuge ausgefüllt sind, bei dem die Verbindungsfugen (5, 8) aus einer Stampfmasse wie in irgendeinem der Ansprüche 1 bis 5 definiert gebildet sind oder durch das Verfahren nach einem der Ansprüche 6 bis 8.

10. Metallurgisches Gefäß nach Anspruch 9, bei dem die Verbindungsfuge (5) ausgebildet ist zwischen zwei konzentrischen ringförmigen Elementanordnungen (4, 5), die eine Seitenwand des Gefäßes bilden, und zwischen denen ein ringförmiger Raum definiert ist, der mit der Verbindungsfuge ausgefüllt ist.

11. Metallurgisches Gefäß nach Anspruch 9, bei dem die Verbindungsfuge (8) ausgebildet ist zwischen einem unteren Teil einer inneren ringförmigen Elementanordnung (4), die eine Seitenwand des Gefäßes bildet, und der Peripherie einer oder mehrerer feuerfester Schichten (24, 25), die den Boden des Gefäßes bilden.

12. Metallurgisches Gefäß nach irgendeinem der Ansprüche 9 bis 11, **dadurch gekennzeichnet, dass** das Gefäß ein Hochofen ist.

## Claims

1. Use of a mixture of a granular phase and a binder phase as a ramming mass for producing hot joints when block lining refractory elements of a refractory lining of a metallurgical vessel such as a blast furnace, wherein the granular phase essentially comprises carbon or carbon-based granules having a microporous structure and the binder comprises at least one component based on tar or polymerising resin, and an additive composed of metallic silicon powder, capable of developing a microporous structure having an average pore size of 2 µm or less on firing at high temperature, by the formation of whiskers which develop across the pores of the hardened tarry or polymerised material.

2. Use according to claim 1, wherein the binder comprises fine graphite granules.

3. Use according to either one of the preceding claims wherein the binder comprises agents which protect against erosion by liquid iron, such as TiC or TiO₂.

4. Use according to claim 1, wherein the granular phase essentially comprises carbon or carbon-based granules having a microporous structure having an average pore size of 2 µm or less.

5. Use according to claim 4, wherein the microporous material granular phase is obtained by grinding microporous refractory blocks, waste from cutting microporous refractory blocks or used microporous carbon blocks.

6. A method for producing hot joints between the refractory elements (2, 3, 4) of a refractory lining of a metallurgical vessel such as a blast furnace, according to which a ramming mass as defined in any one of claims 1 to 5 is used, and the binder is made microporous by the firing resulting from the increase in temperature of the metallurgical vessel, after placement of the ramming mass.

7. A method according to claim 6, used for producing joints (5) between two concentric annular assemblies (3, 4) forming a side wall of the vessel and defining therebetween an annular gap filled by said joints.

8. A method according to claim 6, used for producing joints (8) between a lower part of an inner annular assembly (4) making up a side wall of the vessel and the periphery of one or more refractory layers (24, 25) forming the floor of the vessel.

9. A metallurgical vessel comprising a refractory lining formed by an assemblage of a plurality of assemblies (2, 3, 4) of refractory blocks or bricks which, between at least some of these blocks or bricks or assemblies of blocks or bricks, define gaps filled by a joint, wherein the joints (5, 8) are formed on the basis of a ramming mass as defined in any one of claims 1 to 5, or by the method according to any one of claims 6 to 8.

10. A metallurgical vessel according to claim 9, wherein the joint (5) is formed between two concentric annular assemblies (4, 5) forming a side wall of the vessel, and defining therebetween an annular gap filled by said joint.

11. A metallurgical vessel according to claim 9, wherein the joint (8) is formed between a lower part of an inner annular assembly (4) making up a side wall of the vessel and the periphery of one or more refractory layers (24, 25) forming the floor of the vessel.

12. A metallurgical vessel according to any one of claims 9 to 11, **characterised in that** it is a blast furnace.
